**Europäisches Patentamt**

(19) **European Patent Office**

**Office européen des brevets**

(11) Numéro de publication : **0 130 851
B1**

(12) **FASCICULE DE BREVET EUROPÉEN**

(45) Date de publication du fascicule du brevet : **08.07.87**

(21) Numéro de dépôt : **84400730.2**

(22) Date de dépôt : **11.04.84**

(51) Int. Cl.⁴ : **H 02 H 9/04, H 02 H 7/00**

(54) Appareil de protection contre les surtensions pour une installation ou un réseau électrique à basse tension.

(30) Priorité : **09.05.83 FR 8307850**

(43) Date de publication de la demande : **09.01.85 Bulletin 85/02**

(45) Mention de la délivrance du brevet : **08.07.87 Bulletin 87/28**

(84) Etats contractants désignés : **BE CH DE GB IT LI NL SE**

(56) Documents cités :
**EP-A- 0 046 545
EP-A- 0 050 966
EP-A- 0 071 956
FR-A- 812 674
GB-A- 2 010 613
US-A- 3 894 274**

(73) Titulaire : **MERLIN GERIN
Rue Henri Tarze
F-38050 Grenoble Cédex (FR)**

(72) Inventeur : **Bonniau, Michel
12, rue Creux au Fer
F-71100 Lux (FR)**

(74) Mandataire : **Kern, Paul et al
Merlin Gerin Sce. Brevets 20, rue Henri Tarze
F-38050 Grenoble Cedex (FR)**

Jouve, 18, rue St-Denis, 75001 Paris, France

## Description

L'invention concerne un appareil de protection contre les surtensions d'origine externe ou interne engendrées dans une installation électrique basse tension ou dans un réseau de distribution comprenant un conducteur de neutre et au moins un conducteur de neutre et au moins un conducteur de phase, ledit appareil étant en liaison avec la terre et comportant, logés dans un boîtier :

un limiteur de surtension à éléments non linéaires variables avec la tension,

un dispositif de coupure à mécanisme d'actionnement de contacts disposés électriquement en série avec le limiteur,

et un déclencheur coopérant avec le mécanisme pour commander la mise hors service de l'appareil de protection par ouverture automatique des contacts de l'appareil de coupure, suite à un état défectueux des éléments du limiteur de surtension,

une première borne de connexion susceptible d'être raccordée au conducteur de phase,

une deuxième borne de connexion susceptible d'être raccordée à la terre.

L'utilisation de plus en plus importante de récepteurs contenant des semi-conducteurs (téléviseurs, chaînes HIFI, mini-informatique, etc...) oblige de plus en plus les utilisateurs à se protéger contre les surtensions véhiculées par le réseau d'alimentation électrique. Ces surtensions, provoquées soit par des décharges atmosphériques, soit par des manœuvres, peuvent atteindre plusieurs KV entre les conducteurs actifs du réseau et la terre.

Si on admet que la tenue diélectrique de l'appareillage électrotechnique est de l'ordre de 3 000 volts, alors que celle des appareils électroniques est de l'ordre de 1 500 volts, il y a donc un risque de détérioration.

Le principe du dispositif de protection consiste à écrêter les montées de potentiel en provoquant un écoulement de courant à la terre, au moyen des éléments non linéaires du limiteur de surtension. Un tel appareil de protection est décrit dans la demande de brevet européen EP-A-46 545, dans laquelle l'état du limiteur de surtension est surveillé par un dispositif de coupure à déclencheur magnétothermique. A chaque conducteur actif est associé un pôle de protection relié à la terre.

Les différents éléments non linéaires variables avec la tension du limiteur de surtension, notamment éclateur à gaz, varistance à l'oxyde de zinc ou au carbure de silicium, diode à avalanche contrôlée, peuvent présenter deux états après leur destruction :

mise en court-circuit, suite à une décharge brève mais élevée dans le cas où aucune tension ne reste appliquée aux bornes ;

destruction avec coupure de la jonction, dans le cas où une tension reste appliquée aux bornes après la mise en court-circuit.

A partir de cette constatation, les éléments placés entre le neutre et la terre, dans le cas d'un réseau de distribution en régime TT, risquent de se mettre en court-circuit après l'écoulement d'une décharge énergétique à la terre. Un tel défaut entre le neutre et la terre ne sera pas détecté ou éliminé avec le dispositif de l'art antérieur et il peut en résulter des risques pour l'installation, à savoir :

un défaut permanent d'isolement entre le secteur et la terre,

un aveuglement des dispositifs de protection différentielle placés en amont.

Le document US-A-3 894 274 se rapporte à un limiteur de surtension formé par un montage en étoile de varistances, destiné à protéger un moteur électrique contre les surtensions, apparaissant dans un réseau de distribution électrique. Chaque varistance présente une tension nominale voisine de la moitié de la valeur de la tension nominale du réseau. Le limiteur est branché directement entre la terre et les conducteurs actifs du réseau. La destruction d'une varistance peut engendrer un court-circuit, et la destruction de l'installation. Le montage en étoile permet une réduction du nombre de varistances utilisées, mais non la déconnexion automatique et définitive d'un limiteur de surtension défectueux.

Le document EP-A-50 966 est relatif à un appareil de protection contre les surtensions, comportant un limiteur de surtension à éléments non linéaires variables avec la tension. Le limiteur est formé par un montage en étoile de circuits à diodes, dans lequel une défaillance de l'un quelconque des circuits provoque un court-circuit, qui est éliminé par un appareil de protection constitué par des fusibles ou un disjoncteur de ligne. Cet appareil de protection se trouve en tête de l'installation et est formé par un module indépendant de celui du limiteur de surtension, en étant inséré électriquement dans un conducteur actif de phase du réseau, de manière à interrompre ce dernier, lorsqu'un des éléments limiteurs se met en court-circuit. Il en résulte une coupure générale de l'alimentation de l'installation électrique, mais le limiteur de surtension reste néanmoins connecté électriquement aux conducteurs actifs en aval de l'appareil de protection. Rien ne s'oppose à un remplacement des fusibles ou à un réarmement du disjoncteur de ligne pour rétablir la continuité électrique, avec un risque certain de raccordement d'un limiteur de surtension défectueux. Des inductances additionnelles sont insérées respectivement en série dans les conducteurs actifs entre la source à courant alternatif et les points de raccordement du limiteur de surtension.

L'objet de l'invention consiste à réaliser un appareil de protection fiable, autorisant une triple limitation des surtensions présentes entre phase-terre, neutre-terre et phase-neutre, indépendamment du régime de neutre du réseau, et pouvant être déconnecté automatiquement du réseau, en cas de défaut interne.

La solution à ce problème est indiquée dans la partie caractérisante de la revendication 1. On remarque que le deuxième circuit de neutre et le troisième circuit de terre sont dépourvus de déclencheurs. La mise en court-circuit d'un quelconque élément non linéaire provoque une destruction en chaîne de l'ensemble des éléments, suivie d'une augmentation importante du courant détecté par le déclencheur du premier circuit de phase. Pour un réseau monophasé, un seul déclencheur est ainsi nécessaire pour surveiller l'état de l'ensemble des éléments non linéaires du limiteur de surtension. Le dispositif de coupure bipolaire comporte des contacts séparables dans chaque circuit de phase et de neutre. La varistance du troisième circuit de terre est connectée directement entre le point commun de l'étoile et la terre.

Le déclencheur du premier circuit de phase est agencé pour se trouver, soit dans un état inactif lors du fonctionnement normal du dispositif de protection correspondant à la position de fermeture de l'appareil de coupure, soit dans un état actif de déclenchement lors de la mise en court-circuit d'un quelconque élément des circuits du limiteur entraînant l'ouverture de l'appareil. Le déclencheur peut être constitué, soit par un organe de déclenchement électromagnétique à bobine d'excitation d'un circuit magnétique à armature mobile, soit par un organe de déclenchement thermique à bilame.

Le dispositif est équipé en plus d'organes de signalisation locale ou à distance de l'état de la protection selon la position d'ouverture ou de fermeture de l'appareil de coupure.

D'autres avantages et caractéristiques ressortiront plus clairement de l'exposé qui va suivre de deux modes de mise en œuvre de l'invention, donnés à titre d'exemples et représentés au dessin annexé, dans lequel :

la figure 1 montre le schéma électrique d'un dispositif de protection selon l'invention, associé à un réseau monophasé à régime de neutre TT,

la figure 2 représente le dispositif de la figure 1 avec signalisation locale et à distance de l'état de la protection.

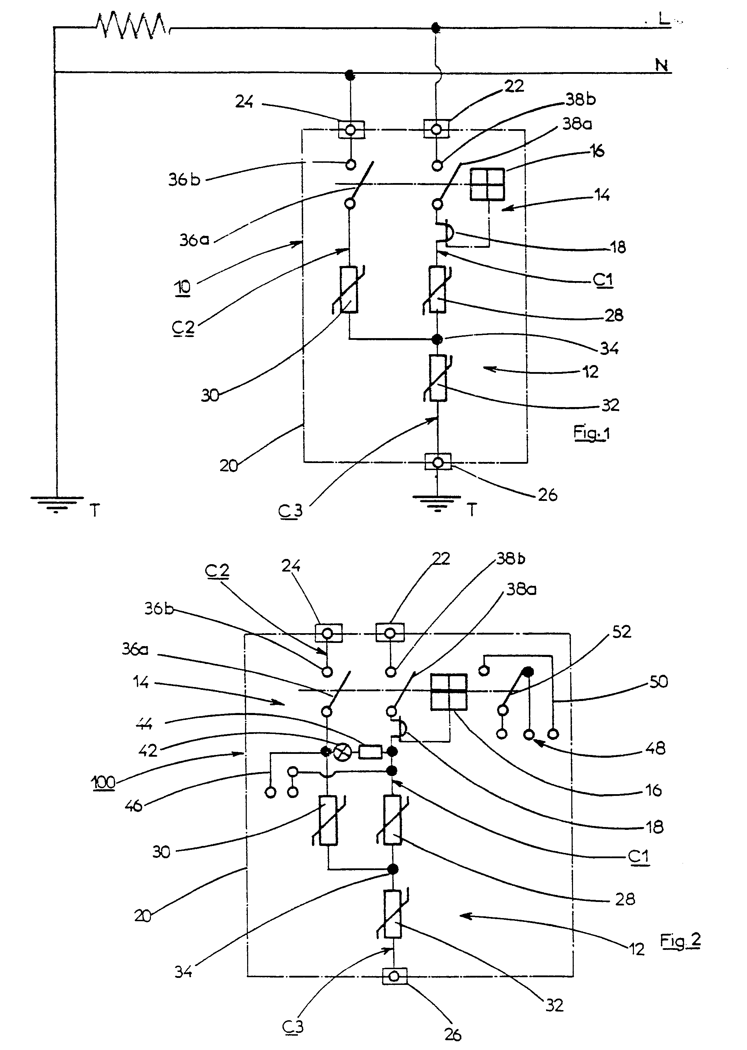

Sur la figure 1 est représenté un module 10 de protection contre les surtensions d'origine externe ou interne, et destiné à être utilisé en tête d'installation ou dans un réseau de distribution électrique à basse tension.

Le réseau monophasé à régime de neutre TT comprend un conducteur actif de phase L et un conducteur de neutre N mis au potentiel de la terre.

Le module 10 bipolaire renferme un limiteur de surtension 12 surveillé par un dispositif de coupure 14 à mécanisme 16 piloté par un déclencheur 18 électromagnétique ou thermique. Le boîtier 20 isolant du module 10 comporte trois bornes 22, 24, 26 de connexion raccordées respectivement aux conducteurs de phase L, de neutre N et à la terre T pour assurer un montage en parallèle du module 10 entre le réseau et la terre T.

Le limiteur de surtension 12 du module 10 est équipé de trois varistances 28, 30, 32 connectées, électriquement en étoile à point commun 34 de manière à autoriser une triple limitation des surtensions entre neutre et phase, entre neutre et terre et entre phase et terre. La varistance 32 inférieure est reliée à la borne 26 de raccordement à la terre T, et la varistance 30 est branchée directement à l'un 36a des contacts mobiles du dispositif de coupure 14 bipolaire. La troisième varistance 28 est connectée au déclencheur 18 en série avec l'autre contact mobile 38a du dispositif 14. Les deux contacts fixes 36b, 38b coopérant avec les contacts mobiles 36a, 38a du dispositif de coupure 14 sont en liaison électrique avec les bornes 24 et 22 de connexion du module 10 aux conducteurs de neutre N et de phase L du réseau monophasé. Les varistances du type à oxyde de zinc ou de titane peuvent être remplacées par tout autre élément de limitation non linéaire variable avec la tension notamment un circuit série comprenant un éclateur à gaz et une varistance, ou une diode à avalanche contrôlée.

L'appareil de coupure 14 bipolaire est formé par un disjoncteur miniature ou par un relais dont le mécanisme 16 est solidaire des contacts mobiles 36a, 38a. Le déclencheur 18 est de préférence électromagnétique à bobine de commande unique destinée à provoquer le déclenchement rapide du mécanisme 16 en cas de destruction ou de mise en court-circuit des varistances. Le déclencheur 18 peut être du type extracteur à armature mobile dont l'un des bouts coopère avec les contacts mobiles 36a, 38a et dont l'autre bout actionne le mécanisme 16.

Le déclencheur 18 électromagnétique peut également être remplacé par un déclencheur thermique à bilame, ou par tout autre élément de déclenchement.

La tension nominale de chaque varistance 28, 30, 32 est légèrement supérieure à la moitié de la valeur de la tension présente entre les conducteurs L et N du réseau à protéger. Pour un réseau monophasé à 220 volts, la tension nominale de chaque varistance sera de l'ordre de 130 volts. On remarque que le module 10 de protection contre les surtensions d'un réseau monophasé est constitué par un couplage en étoile de trois circuits comprenant :

un premier circuit C1 de phase connecté entre le point commun 34 de l'étoile et la borne 22, et formé par la liaison en série de la varistance 28, du déclencheur 18 et du contact mobile 38a,

un deuxième circuit C2 de neutre branché entre le point 34 et la borne 24 et comportant la varistance 30 en série avec le contact mobile 36a,

et un troisième circuit C3 de terre doté de l'unique varistance 32 reliée entre le point 34 et la borne 26.

Le fonctionnement du module 10 de protection contre les surtensions selon la Figure 1 est le suivant :

L'association en série deux à deux des trois varistances 28, 30, 32 permet d'écrêter les surtensions entre :

le neutre N et la phase L du réseau par la mise en série des deuxième et premier circuits C2, C1,

le neutre N du réseau et la terre T par la mise en série des deuxième et troisième circuits C2, C3,

entre la phase L du réseau et la terre T par la mise en série des premier et troisième circuits C1, C3.

En fonctionnement normal du module 10 les contacts mobiles 36a, 38a de l'appareil 14 se trouvent en position de fermeture, car le déclencheur 18 reste inactif lors de décharges brèves à la terre. La capacité d'absorption des surtensions est très efficace grâce à la mise en série de deux varistances pour chaque type de défaut.

En cas de mise en court-circuit d'une varistance par exemple 30, due au vieillissement du module 10 ou à des décharges importantes et répétées, la surcharge appliquée sur l'autre varistance entraîne une destruction en chaîne des deux autres varistances. Il en résulte une augmentation importante du courant traversant le module 10, et la réaction instantanée du déclencheur 18 qui provoque l'ouverture rapide de l'appareil de coupure 14 et la mise hors service du module 10 coupé électriquement du réseau. Cette disposition permet d'utiliser un seul déclencheur 18 inséré dans le premier circuit de phase C1 du module 10 et de détecter la destruction de tous les éléments de limitation.

La commande du mécanisme est inaccessible ce qui permet d'avoir une visualisation efficace de l'état du limiteur de tension.

La détection de la mise en court-circuit des varistances 28, 30, 32 est complétée par un dispositif de signalisation locale ou à distance de l'état de la protection. La figure 2 représente un module 100 bipolaire équipé du déclencheur 18 selon le dispositif de la figure 1, et d'éléments additionnels de signalisation et de commande. Les mêmes numéros de repères seront utilisés pour désigner des pièces identiques utilisées dans le dispositif de la figure 1. Le mécanisme 16 peut être équipé d'un témoin de visualisation à deux positions stables O et I. L'ouverture de l'appareil de coupure 14 suite à un court-circuit d'une varistance détectée par le déclencheur 18 se traduit par l'apparition du voyant O du témoin entraînant une signalisation mécanique locale de la mise hors service du module 100.

Un voyant 42 lumineux est connecté en série avec une résistance 44 entre les deux circuits C1 et C2, par exemple entre les deux varistances 28, 30 à l'opposé de leur point commun 34 de raccordement. En position de fermeture des contacts 36a, 38a de l'appareil 14, le voyant 42 est allumé en indiquant par une signalisation lumineuse locale le fonctionnement normal du module 100.

L'extinction du voyant 42 par ouverture de l'appareil 14 signale la mise hors service du module 100.

Le voyant 42 peut également être complété ou remplacé par un circuit 46 auxiliaire de signalisation lumineuse à distance de l'état de protection du module 100. Une commande 48 auxiliaire à distance peut être également actionnée grâce à un circuit électrique 50 de commande piloté par un contact inverseur 52 solidaire du mécanisme 16.

Le principe de limitation des surtensions utilisé dans les dispositifs des Figures 1 et 2 peut être étendu à des réseaux polyphasés :

soit en intégrant les varistances dans un même boîtier, chaque circuit de phase du module ayant un déclencheur,

soit en juxtaposant plusieurs modules bipolaires 10 ou 100 des Figures 1 ou 2. Cette dernière disposition appliquée à un réseau triphasé avec neutre permet de conserver un certain niveau de protection même après la mise hors service d'un des modules 10 ou 100.

L'invention n'est bien entendu nullement limitée aux modes de mise en œuvre plus particulièrement décrits et représentés au dessin annexé, mais elle s'étend bien au contraire à toute variante restant dans le cadre des revendications, notamment celle dans laquelle l'agencement du module 10 ou 100 du réseau monophasé à régime de neutre TT des Figures 1 et 2 serait appliqué à un autre réseau ayant un régime de neutre différent, par exemple TN ou IT.

**Revendications**

1. Appareil de protection contre les surtensions d'origine externe ou interne engendrées dans une installation électrique à basse tension ou dans un réseau de distribution, comprenant un conducteur de neutre (N) et au moins un conducteur de phase (L), ledit appareil étant en liaison avec la terre et logé dans un boîtier (20) isolant d'un module (10, 100) renfermant :

un limiteur (12) de surtension à éléments non linéaires variables avec la tension,

un dispositif de coupure (14) à mécanisme (16) d'actionnement de contacts (36a, 38a) disposés électriquement en série avec le limiteur (12),

et un déclencheur (18) coopérant avec le mécanisme (16) pour commander la mise hors service de l'appareil de protection par ouverture automatique des contacts (36a, 38a) du dispositif de coupure (14), suite à un état défectueux des éléments du limiteur (12) de surtension,

une première borne de connexion (22) susceptible d'être raccordée au conducteur de phase (L),

une deuxième borne de connexion (26), susceptible d'être raccordée à la terre (T), caractérisé en ce que le module (10, 100) comporte :

une troisième borne de connexion (24), susceptible d'être raccordée au conducteur de neutre (N),

trois circuits (C1, C2, C3) couplés en étoile, ayant un premier circuit (C1) de phase connecté entre le point commun (34) de l'étoile et la première borne de connexion (22), un deuxième circuit (C2) de neutre branché entre le point commun (34) et la troisième borne de connexion (24) et un troisième circuit (C3) de terre relié entre le point commun (34) et la deuxième borne de connexion (26), chaque circuit (C1, C2, C3) comprenant un élément non linéaire (28, 30, 32) du limiteur (12), ayant une tension nominale supérieure à la moitié de la valeur de la tension présente entre les conducteurs de phase (L) et de neutre (N) du réseau, pour provoquer lors de la destruction de l'un quelconque des éléments non linéaires (28, 30, 32), la destruction de l'élément en série, le déclencheur (18) du mécanisme (16) à étant inséré dans le premier circuit (C1) de phase,

et un contact mobile (38a, 36a) du dispositif de coupure (14), agencé dans chacun des premier et deuxième circuits de phase (C1) et de neutre (C2), en série avec l'élément non linéaire (28, 30) associé, l'élément non linéaire (32) du troisième circuit (C3) de terre étant connecté directement entre le point commun (34) de l'étoile et la deuxième borne de connexion (26).

2. Appareil de protection selon la revendication 1, caractérisé par le fait que le déclencheur (18) du premier circuit (C1) de phase se trouve soit dans un état inactif lors du fonctionnement normal de l'appareil de protection correspondant à la position de fermeture du dispositif de coupure (14), soit dans un état actif de déclenchement lors de la mise en court-circuit d'un quelconque élément non linéaire (28, 30, 32) des circuits (C1, C2, C3) du limiteur (12) entraînant l'ouverture du dispositif de coupure (14), sans possibilité de réenclenchement.

3. Appareil de protection selon la revendication 2, caractérisé par le fait que le déclencheur (18) est formé par un organe de déclenchement électromagnétique, équipé d'une armature mobile, piloté par une bobine de commande intercalée entre le contact mobile (38a) et l'élément non linéaire (28) du premier circuit (C1) de phase.

4. Appareil de protection selon la revendication 2, caractérisé par le fait que le déclencheur (18) est constitué par un organe de déclenchement thermique à bilame.

5. Appareil de protection selon l'une des revendications 1 à 4, caractérisé par le fait que le mécanisme (16) est doté d'un témoin de visualisation ayant une première et une deuxième positions stables I et O correspondant respectivement à la fermeture et à l'ouverture du dispositif de coupure (14), l'apparition de la deuxième position O du témoin se traduisant par une signalisation mécanique locale de la mise hors service de l'appareil.

6. Appareil de protection selon l'une des revendications 1 à 5, caractérisé par le fait qu'entre les premier et deuxième circuits de phase (C1) et de neutre (C2) est agencé un voyant (42) lumineux et/ou un circuit auxiliaire (46) destiné respectivement à la signalisation locale ou à distance de l'état de l'appareil de protection.

7. Appareil de protection selon l'une des revendications 1 à 6, caractérisé par le fait que le mécanisme (16) coopère avec un contact (52) inverseur d'un circuit (50) d'une commande auxiliaire (48) à distance.

8. Appareil de protection selon l'une des revendications 1 à 7, associé à un réseau de distribution monophasé à régime de neutre TT, caractérisé par le fait que les éléments non linéaires du limiteur (12) sont formés par des varistances (28, 30, 32) et que le dispositif de coupure (14) comporte un disjoncteur miniature bipolaire ou un relais commandé par le déclencheur (18) unique du premier circuit (C1) de phase.

**Claims**

1. Device for protection against external or internal overvoltage, generated in a low voltage electrical installation, or in a distribution system, comprising a neutral conductor (N) and at least a phase conductor (L), said device being connected to earth and housed in an insulated case (20) of a module (10, 100) comprising ;

an overvoltage limiter (12) having non linear elements, variable with voltage,

a breaking device (14) with an operating mechanism (16) of contacts (36a, 38a) electrically connected in series with the limiter (12),

and a trip-release (18) co-operating with the mechanism (16) to control the disconnection of the protection device by automatic opening of the contacts (36a, 38a) of the breaking device (14) following a defective state of the elements of the overvoltage limiter (12),

a first connection terminal (22) which may be connected to the phase conductor (L),

a second connection terminal (26) which may be connected to earth (T), characterized in that the module (10, 100) comprises :

a third connection terminal (24) which may be connected to neutral conductor (N),

three star-coupled circuits (C1, C2, C3) having a first phase circuit (C1) connected between the common point (34) of the star and the first terminal connection (22), a second neutral circuit (C2) connected between common point (34) and the third connection terminal (24) and a third earth circuit (C3) connected between the common point (34) and the second connection terminal (26), each circuit (C1, C2, C3) comprising a non linear element (28, 30, 32) of the limiter (12), having a nominal voltage greater than half of the voltage value, existing between the phase conductors (L) and the neutral conductor (N) of the system, to provoke, during the destruction of anyone of non-linear elements (28, 30, 32) the destruction of series elements, the trip-release (18) of the mechanism (16) being inserted in the first phase circuit (C1),

and a movable contact (38a, 36a) of the breaking device (14) disposed in each of the first and second phase circuits (C1) and neutral circuit (C2) in series with associated non linear element (28, 30), non linear element (32) of the third earth circuit (C3) being directly connected between common point (34) of the star and the second connection terminal (26).

2. Protection device according to claim 1, characterized in that the trip-release (18) of the first phase-circuit (C1) is either inactive during a normal working of the protection device, corresponding to the closing position of the breaking device (14) or in active tripping state during a short-circuit of anyone of non linear element (28, 30, 32) of the circuits (C1, C2, C3) of the limiter (12), leading to an opening of the breaking device (14) without any reclosing possibility.

3. Breaking device according to claim 2, characterized in that the trip-release (18) is composed of an electromagnetic tripping member, equipped with a movable armature, controlled by a control coil, inserted between the movable contact (38a) and the non linear element (28) of the first phase-circuit (C1).

4. Protection device according to claim 2, characterized in that the trip-release (18) is constituted by a thermal tripping having a bimetal strip.

5. Protection device according to anyone of claims 1 to 4, wherein the mechanism (16) is fitted up with a visualisation repeater, having a first and second stable positions I and O, corresponding respectively to the closing and opening of the breaking device (14), the appearance of the second position O of the repeater being shown by a local mecanic signalling of the device, when it is disconnected.

6. Protection device according to anyone of the claims 1 to 5, characterized in that between the first and second phase circuits (C1) and neutral circuit (C2) is connected an indicator light (42) and/or an auxiliary circuit (46), assigned respectively to local signalling or remote signalling of the state of the protection device.

7. Protection device according to anyone of the claims 1 to 6, characterized in that the mechanism (16) co-operates with a reverser contact of a circuit (50) of an auxiliary remote signalling.

8. Protection device according to anyone of the claims 1 to 7, associated to single-phase distribution network, having a neutral connection point TT, characterized in that non linear elements of the limiter (12) are constituted by varistors (28, 30, 32) and that the breaking circuit (14) comprises a bipolar miniature circuit-breaker or a relay controlled by the only trip-release (18) of the first phase-circuit (C1).


**Patentansprüche**

1. Schutzgeraet gegen aeussere oder innere, in einer elektrischen Niederspannungsanlage oder in einem Verteilungsnetz mit einem Nulleiter (N) und wenigstens einem Phasenleiter (L) erzeugte Ueberspannungen, wobei dieses Geraet mit der Erde verbunden und in einem Isoliergehaeuse (20) eines Moduls (10, 100) untergebracht ist, welches enthaelt :
einen Ueberspannungsbegrenzer (12) mit nicht linearen mit der Spannung aendernden Elementen,
eine Unterbrechungsvorrichtung (14) mit in Serie des Begrenzers (12) geschalteten Kontakten (36a, 38a), die durch einen Mechanismus (16) betaetigt werden,
und einen Ausloeser (18), der zum Ausschalten des Schutzgeraetes durch automatisches Oeffnen der Kontakte (36a, 38a) der Unterbrechungsvorrichtung (14) bei einem schlechten Zustand der Elemente des Ueberspannungsbegrenzers (12) mit dem Mechanismus (16) zusammenwirkt,
eine erste an den Phasenleiter (L) verbindbare Anschlussklemme (22),
eine zweite an der Erde (T) verbindbare Anschlussklemme (26), dadurch gekennzeichnet, dass dieses Modul (10, 100) aufweist :
eine dritte an den Nulleiter (N) verbindbare Anschlussklemme (24),
drei im Stern gekuppelte Stromkreise (C1, C2, C3) mit einem ersten zwischen dem Sternmittelpunkt (34) und der ersten Anschlussklemme (22) geschalteten ersten Phasenkreis (C1), einem zweiten zwischen dem Mittelpunkt (34) und der dritten Anschlussklemme (24) geschalteten Nullkreis (C2) und einem dritten zwischen dem Mittelpunkt (34) und der zweiten Anschlussklemme (26) geschalteten Erdkreis (C3), wobei jeder Stromkreis (C1, C2, C3) ein nicht lineares Element (28, 30, 32) des Begrenzers (12) hat, dessen Nennspannung groesser ist als die Haelfte der Spannung zwischen dem Phasenleiter (L) und dem Nulleiter (N) des Netzes, um bei Vernichtung irgendeines der nicht linearen Elemente (28, 30, 32) die Vernichtung des in Serie geschalteten Elementes zu bewirken, wobei der Ausloeser (18) des Mechanismus (16) in dem ersten Phasenkreis (C1) geschaltet ist,
und ein in jedem der ersten und zweiten Phasenkreise (C1) und Nullkreise (C2) in Serie mit dem nicht linearen Element (28, 30) geschalteter beweglicher Kontakt (38a, 36a) der Unterbrechungsvorrichtung, wobei das nicht lineare Element (32) des dritten Erdkreises (C3) direkt zwischen dem Sternmittelpunkt (34) und die zweite Anschlussklemme (26) geschaltet ist.

2. Schutzgeraet nach Anspruch 1, dadurch gekennzeichnet, dass der Ausloeser (18) des ersten Phasenkreises (C1) sich entweder in inaktiver Lage befindet, wenn das Schutzgeraet normal arbeitet, wobei die Unterbrechervorrichtung (14) geschlossen ist oder in einer aktiven Ausloeselage, wenn irgendeines der nicht linearen Elemente (28, 30, 32) der Kreise (C1, C2, C3) des Begrenzers (12) kurzgeschlossen ist, wobei die Unterbrechungsvorrichtung (14) oeffnet, ohne Moeglichkeit eines Wiedereinschaltens.

3. Schutzgeraet nach Anspruch 2, dadurch gekennzeichnet, dass der Ausloeser (18) durch ein elektromagnetisches Ausloeseorgan gebildet wird mit einem beweglichen Anker, der durch eine zwischen dem beweglichen Kontakt (38a) und dem nicht linearen Element (28) des ersten Phasenkreises (C1) geschaltete Spule gesteuert wird.

4. Schutzgeraet nach Anspruch 2, dadurch gekennzeichnet, dass der Ausloeser (18) durch ein thermisches bimetallisches Ausloeseorgan gebildet wird.

5. Schutzgeraet nach einem der Ansprueche 1 bis 4, dadurch gekennzeichnet, dass der Mechanismus (16) einen Anzeigzeugen mit einer ersten und zweiten stabilen Lage I und O hat, die beziehungsweise der Schliess- und Offenlage der Unterbrechungsvorrichtung (14) entsprechen, wobei das Erscheinen der zweiten Lage O des Zeugens eine mechanische lokale Anzeige des Aussenbetriebes des Geraetes anzeigt.

6. Schutzgeraet nach einem der Ansprueche 1 bis 5, dadurch gekennzeichnet, dass zwischen dem ersten und zweiten Phasenkreis (C1) und dem Nullkreis (C2) ein Lichtanzeiger (42) und/oder ein Hilfskreis zur Fern- oder Lokalanzeige der Lage des Schutzgeraetes geschaltet ist.

7. Schutzgeraet nach einem der Ansprueche 1 bis 6, dadurch gekennzeichnet, dass der Mechanismus (16) mit einem Umschaltkontakt (52) eines Fernsteuerkreises (48) zusammenarbeitet.

8. Schutzgeraet nach einem der Ansprueche 1 bis 7, fuer ein einphasiges Verteilungsnetz mit einer TT-Nulleiterschaltung, dadurch gekennzeichnet, dass die nicht linearen Elemente (12) des Begrenzers Varistoren (28, 30, 32) sind, und dass die Unterbrechervorrichtung (14) einen zweipoligen Miniaturleistungsschalter oder ein Schuetz aufweist, das durch den einzigen Ausloeser (18) des ersten Phasenkreises (C1) gesteuert wird.

**0 130 851**

Fig. 1

Fig. 2